# EUROPEAN PATENT SPECIFICATION

(11) **EP 1 366 813 B1**
(45) Date of publication and mention of the grant of the patent: **17.06.2009**
(21) Application number: 01273676.5
(22) Date of filing: 14.11.2001
(51) Int. Cl.: B01J 27/24, B01J 35/02, C01B 3/04, C01B 13/02, B01J 35/00

(54) **PHOTOCATALYSTS FOR DECOMPOSITION OF WATER WITH VISIBLE LIGHT**
PHOTOKATALYSATOREN FÜR DIE ZERSETZUNG VON WASSER MIT SICHTBAREM LICHT
PHOTOCATALYSEURS PERMETTANT DE DECOMPOSER L'EAU A L'AIDE DE LA LUMIERE VISIBLE

(30) Priority: 07.02.2001 JP 2001030627
(43) Date of publication of application: 03.12.2003
(73) Proprietor: Japan Science and Technology Agency, Kawaguchi-shi Saitama (JP)
(72) Inventor: DOMEN, Kazunari, Sagamihara-shi, Kanagawa 228-0803 (JP); HARA, Michikazu, Yokohama-shi, Kanagawa 231-0838 (JP); TAKATA, Tsuyoshi, Sagamihara-shi, Kanagawa 228-0802 (JP); HITOKI, Go, Yamato-shi, Kanagawa 242-0001 (JP)
(74) Representative: McCluskie, Gail Wilson
(86) International application number: PCT/JP2001/009952
(87) International publication number: WO 2002/062470

(56) References cited:
- JP-A- 5 193 902
- JP-A- 9 075 745
- JP-A- 59 203 701
- STRAEHLE J: "DIE KRISTALLSTRUKTUR DES TANTAL(V)-NITRIDS TA3N5 CRYSTAL STRUCTURE OF TANTALUM(V) NITRIDE TA3N5" ZEITSCHRIFT FUR ANORGANISCHE UND ALLGEMEINE CHEMIE, VERLAG JOHANN AMBROSIUS BARTH. LEIPZIG, DD, vol. 402, no. 1, 1973, pages 45-57, XP001231425 ISSN: 0044-2313
- M. HARA ET AL.: "TaON and Ta3N5 as new visible light driven photocatalysts" CATALYSIS TODAY, vol. 78, 2003, pages 555-560, XP002364912
- T. TAKATA ET AL.: "Recent progress of photocatalysts for overall water splitting" CATALYSIS TODAY, vol. 44, 1998, pages 17-26, XP002364913
- PATENT ABSTRACTS OF JAPAN vol. 009, no. 071 (C-272), 30 March 1985 (1985-03-30) & JP 59 203701 A (KOGYO GIJUTSUIN; others: 0J), 17 November 1984 (1984-11-17)

## Description

### FIELD OF THE INVENTION

The present invention relates to a novel photocatalyst. Namely, this invention relates to a photocatalyst which contains at least rhombic tantalum nitride, particularly, a visible-light active photocatalyst consisting of rhombic tantalum nitride and a photocatalyst for the water-splitting.

The rhombic tantalum nitride has a promoter composed of a transition metal loaded thereon.

### BACKGROUND OF THE INVENTION

The following photocatalytic reaction is well-known as a technique to obtain an aimed subject. That is, the light is irradiated to a solid compound which has a photocatalytic function so as to generate excited electrons and holes. Then a substance is oxidized or reduced by said excited electrons and holes and obtain the aimed object.

In particular, the photocatalytic decomposition of water, is interesting from the view point of photo energy transformation. Further, a photocatalyst which shows activity in the photo decomposing reaction of water can be recognized as an excellent photo functional material which provides function such as photo absorption, electrolytic separation or oxidation-reduction reaction at the surface.

Kudo, Kato et al, explain that alkaline tantalate or alkaline earth element is a photocatalyst which shows excellent activity to the stoichiometric photocatalytic decomposing reaction of water by quoting various prior arts [for example, Catal. Lett., 58(1999), 153-155; Chem. Lett., (1999), 1207; Surface, Vol.36, No.12. (1998), 625-645 (hereinafter shortened to Document A)] . In above mentioned Document A, there is an explanation about useful photocatalytic materials for proceeding with the decomposing reaction of water to hydrogen and/or oxygen using a photocatalyst, and many indications about photocatalyst used for stoichiometric photocatalytic decomposing reaction of water are mentioned.

Further, a photocatalyst which loads a promoter such as platinum or NiO is referred.

However, the photocatalysts explained in these documents are mainly compounds containing oxygen as a non-metallic element and a transition metal such as Ta, Nb and Ti as a metal. In the cases of various solid photocatalysts, since the width of a forbidden band exists between a valence electron band and a conduction band, that is, band gap energy is larger than 3eV, it is difficult to excite it by low energy under 3eV, namely it is difficult to generate electrons and positive holes by light. On the contrary, almost all of the conventional solid photocatalysts which can generate electrons and holes by visible-light irradiation are unstable under the conditions of photocatalytic water decomposing reaction. For example, the band gap energy of CdS or Cu-ZnS is 2.4eV, but the catalytic reaction is restricted because it is affected by photo-corrosive action, which is corrosive oxidative action. In the meanwhile, almost all of the solar light which reaches to the surface of the earth is the visible light radiation of lower energy. Therefore, for the purpose of progressing various photocatalytic reactions effectively, a stable photocatalyst which acts by visible light is needed. However, among conventional techniques, there is no technique to satisfy the above mentioned requirement.

The U.V.(ultra violet) ·visible light absorption spectrum of cadmium sulfide CdS on the market (99.99% purity) is already measured and it is known that it absorbs the light of spectrum region from ultra violet to visible light of 550nm. Further, according to the reports of many researchers, in the case of CdS, since a valence electron band and a conduction band, which forms band gap 2.4eV, has surplus to generate oxygen and hydrogen by electric potential view, theoretically it is deemed to have an ability to decompose water to hydrogen and oxygen. However, there is a report which reports that when a decomposing reaction of water is carried out by irradiating with visible light over 440nm, hydrogen can be stably obtained, but the generation of oxygen can not be observed at all. This phenomenon can be explained as follows. That is, photo dissolution of the catalyst itself, in other words, photo-corrosive action is caused because of instability of chemical species on the catalyst surface and when a positive hole in the inside of the solid generated by photo excitation is transferred to the surface, it oxidizes a S²⁻ on the surface in preference a water molecule and forms a surface film.

From the above mentioned fact, it is obviously known that the pure sulfide CdS can reduce protons to hydrogen by visible light having longer wavelength than 440nm, but is not a stable enough material to generate oxygen from water and does not have such an ability.

The inventors of the present invention have conjectured that since a valence electron of a nitrogen atom has higher energy than that of an oxygen atom, a band gap energy of a metal compound containing a nitrogen atom can be made smaller than that of a metal oxide. The inventors considered that a metal and a metal compound bonded with an adequate amount of nitrogen atoms can generate excitation electrons and holes and will become a photocatalyst which acts by visible light irradiation. The inventors of the present invention synthesized oxynitride containing a transition metal and proposed a photocatalyst which acts by visible light (refer to JP Application 2000-256681).

The object of the present invention is to provide a novel photocatalyst which acts at broad wave length region of visible light. The inventors of the present invention have further proceeded with an idea of above mentioned oxynitride containing transition metal, and conclude that a photocatalyst which acts by visible light can be obtained from a compound wherein transition metal is bonded with nitrogen alone. Therefore, the inventors of the present invention have concentrated in the investigation for the synthesis of stable transition metal nitride, and have found out that a compound containing rhombic tantalum nitride of chemical formula Ta₃N₅ can be used as a stable photocatalyst. Thus the object of the present invention is accomplished. A photocatalyst containing rhombic tantalum nitride is effective, and this means that the compound is not necessary to be a pure rhombic tantalum nitride but it is sufficient if the diffraction spectrum of tantalum nitride is detected by an X-ray diffraction.

Strähle in Z. Anorg. Allg. Chem, Vol. 402, pgs 47 to 57, 1973, No.1 discloses crystals of Ta₃N₅, obtained by the reaction of TaCl₅ with NH₄Cl.

JP 59203701 provides photocatalysts supported on a TiO₂ carrier. The catalysts may be boride, nitride, phosphide or carbide of transition metals such as Ti, Zr, Nb, Ta, Cr and Mo.

Takata et al in Catalysis Today, 1998, Vol. 44, pgs 17 to 26 relates to the use of photocatalysts for H₂O decomposition to H₂ and O₂. A number of catalysts are disclosed, such as TiO₂ and Ti₂O₅.

### DISCLOSURE OF THE INVENTION

The present invention relates to a photocatalyst which consists of rhombic tantalum nitride having a promoter loaded thereon, made of transition metal, and more desirably, the promoter being loaded on said photocatalyst is platinum.

The third one of the present invention is a photocatalyst for decomposition of water comprising the photocatalyst of the invention.

### BRIEF ILLUSTRATION OF THE DRAWINGS

Fig.1 is a graph showing the X-ray diffraction pattern of visible light photocatalyst Ta₃N₆ of the present invention.
Fig.2 is a graph showing the U.V.•visible light diffuse reflectance spectrum of Ta₃N₅ of the present invention.
Fig.3 is a graph showing hydrogen evolution rate by irradiating the visible-light longer than 420nm using 1 wt% Pt promoter loaded Ta₃N₅ as a photocatalyst to 0.200dm³ of aqueous solution of 10 vol% methanol in which 0.2g of said catalyst is suspended.
Fig.4 is a graph showing oxygen evolution rate by irradiating the visible-light longer than 420nm using 1 wt% Pt promoter loaded Ta₃N₅ as a photocatalyst to 0.200dm⁸ of aqueous solution of 0.01mol/dm³ AgNO₃ in which 0.2g of said catalyst is suspended.
Fig.5 is a graph showing the X-ray diffraction pattern of Ta₂O₅, which is the starting material of photocatalyst of the present invention.
Fig.6 is a graph showing the U.V. visible light diffuse reflectance spectrum of photocatalyst Ta₂O₆, which is the starting material of photocatalyst of the present invention.
Fig.7 is a graph showing the X-ray diffraction pattern of the mixed powder of Ta₂O₅ and La₂O₃ which is calcined under ammonia gas flow for 2.5-20 hours.
Fig.8 is a graph showing hydrogen and oxygen evolution rate by irradiating the visible light longer than 420nm using 1 wt% Pt promoter loaded calcined mixed powder of Fig.7 as a visible light photocatalyst to 0.200dm³ of aqueous solution of 10 vol% methanol in which 0.2g of said catalyst is suspended and to 0.200dm³ of aqueous solution of 0.01mol/dm³ AgNO₃ in which 0.2g of said catalyst is suspended.

### THE BEST EMBODIMENT TO CARRY OUT THE INVENTION

The present invention will be illustrated more in details.
A. Tantalum nitride Ta₃N₅ which has photocatalytic function at visible light of the present invention can be synthesized by the reaction of a tantalum compound and a nitrogen containing compound. As the starting material of said tantalum compound, tantalum oxide, tantalum halide, tantalate or tantalum complex are used. Tantalum nitride which has photocatalytic function at visible light of the present invention can be synthesized by reacting the above mentioned starting material for tantalum compound or the mixture of said starting material for tantalum compound with other metal oxide, metal halide or metallic salt with ammonia, metallic amide or complex of metallic amine.
   Especially, the reaction of tantalum oxide with ammonia is advantageous for the synthesis method of the photocatalyst of the present invention. In this reaction, ammonia acts as a reducing agent and also as a nitriding agent.
   The flow rate of ammonia depends on the reacting temperature. That is, when the temperature is high, the supplying speed becomes fast. The reacting temperature is within the limit of 400°C-1200°C (673-1473K).
B. The tantalum nitride obtained by above mentioned calcinating (nitriding) process, the catalyst activity of it can be improve by adding a promoter.
   As the promoter, transition metal or transition metal compound, for example, platinum (Pt), nickel oxide (NiO) can be mentioned. The adding amount of the promoter to the catalyst is within the limit from 0.1wt% to 10wt%
   As the method for adding the promoter, a conventional adding method of the promoter to the photocatalyst can be used. For example, in the case of Pt, an aqueous solution of tetraaminedichloroplatinum [Pt(NH₃)₄Cl₂] is penetrated into the catalyst and dried, then reduced by hydrogen, thus Pt can be added.

### EXAMPLES

The present invention will be illustrated more in detail according to the Examples. However, the following Examples are mentioned for the purpose of clearly explaining the usefulness of the present invention and is not to intended to limit the scope of the present invention.

### Example 1

Tantalum oxide Ta₂O₅ (1.00g) is heated to 850°C (1123K) by 10°C (10K)/minute temperature elevating rate and maintain this temperature for 25hours under the ammonia NH₃ flow rate of 1dm³/min., then quenched to the room temperature under He gas flow. Thus, Ta₃N₅ material is synthesized. Platinum, which is a promoter, is added by the following process. That is, an aqueous solution of tetraaminedichloroplatinum Pt(NH₃)₄Cl₂ is impregnated into the obtained Ta₃N₅ material in a water bath and water is evaporated. Then it is reduced by hydrogen gas at 300°C (573K) for 2 hours. The impregnating amount of the promoter can be altered within the limit of 0.1-10 wt%.

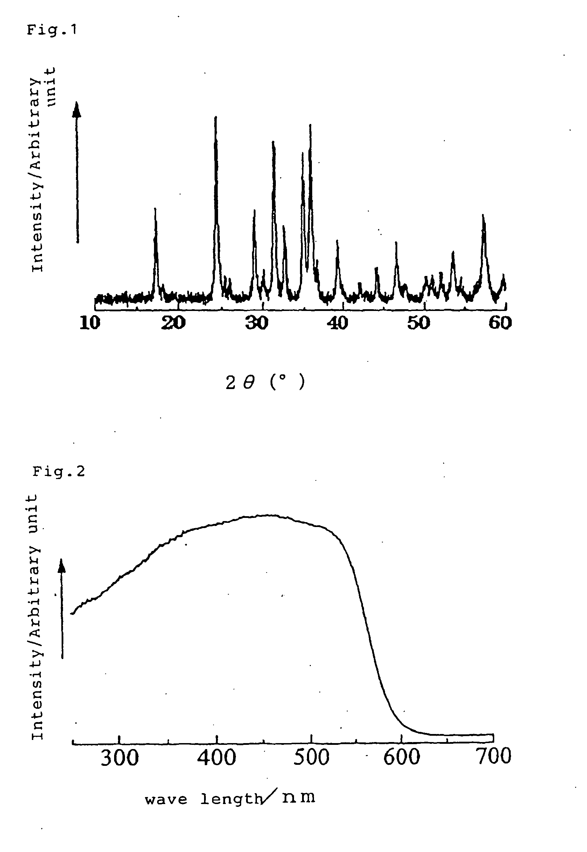

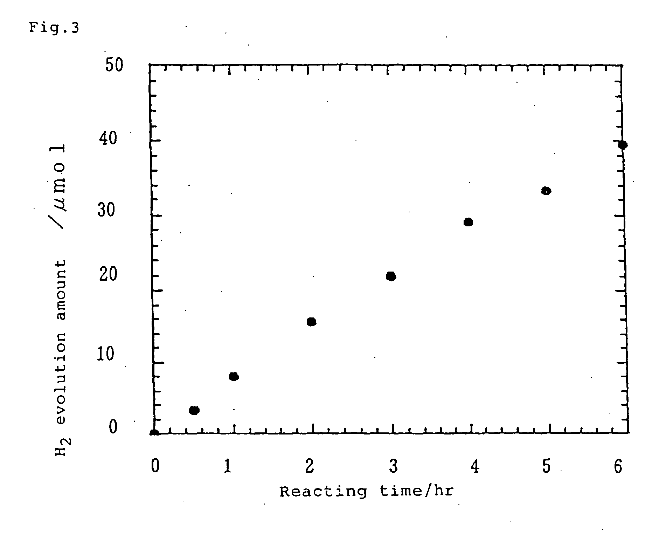

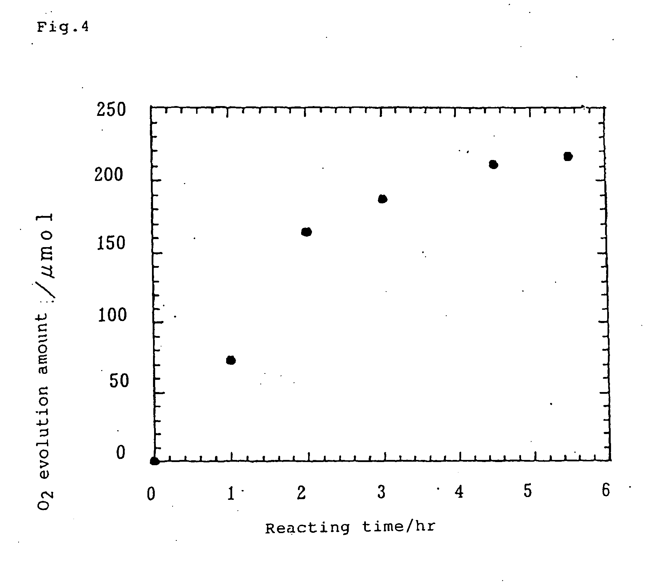

The X-ray diffraction pattern of calcined Ta₃N₅ material is shown in Fig.1. All the diffraction peaks in Fig.1 are assigned to those of Ta₃N₅ and the generation of rhombic Ta₃N₅ is recognized. That is, it is recognized that the obtained product is composed of Ta₃N₅ on which Pt promoter is loaded. U.V -visible light diffuse reflectance spectrum of said material is shown in Fig.2. It is obvious from Fig.2 that the above material absorbs the visible light of shorter wavelength than 620nm. In Fig.3, hydrogen evolution rate by irradiating the visible light longer than 420nm using 1 wt% Pt promoter loaded Ta₃N₅ as a visible light photocatalyst to 0.200dm³ of aqueous solution of 10vol.% methanol in which 0.2g of said catalyst is suspended is shown. As the light source, 500W xenon lamp is used, and visible light of longer wavelength than 420nm is irradiated by using a wavelength filter which cut off the light of shorter wavelength than 420nm. As shown in Fig.3, it becomes clear that the above mentioned catalyst can generate hydrogen constantly from an aqueous solution of methanol under the irradiation of visible light of longer wavelength than 420nm. In Fig.4, oxygen evolution rate by irradiating the visible light of longer wavelength than 420nm using 1 wt% Pt promoter loaded Ta₃N₅ as a visible light photocatalyst to 0.200dm³ of aqueous solution of 0.01mol/dm³ AgNO₃ in which 0.2g of said catalyst is suspended is shown. The reaction is carried out by the same condition to above mentioned hydrogen generating experiment. As shown in Fig.4, it becomes clear that the above mentioned catalyst can generate oxygen from an aqueous solution of silver nitrate. As mentioned above, it is recognized that Ta₃N₅ has an ability to reduce protons to hydrogen and to oxidize water to oxygen by visible light of longer wavelength than 420nm. Further, in the case of irradiation of visible light of longer wavelength than 600nm by passing through a wavelength filter which cuts off the visible light of shorter wavelength than 600nm, the same results to the above mentioned case is obtained. In the meanwhile, in the case when visible light of longer wavelength than 700nm is irradiated, by passing through a wavelength filter which cuts off the visible light of shorter wavelength than 700nm, the generation of hydrogen or oxygen is not observed. Thus, calcined mixture powder containing Ta₃N₅ material is synthesized.

### Example 2

The mixture of calcined mixture powder containing Ta₂O₅ (1.00g) powder and lanthanum oxide La₂O₃ (0.74g) powder is heated to 850°C (1123K) by 10K/minute temperature elevating rate and this temperature is maintained for 2.5-20hours under the ammonia NH₃ gas flow rate of 1dm³/min., then quenched to room temperature under He gas flow. Pt, which is a promoter, is added according to following process. That is, aqueous solution of tetraaminedichloroplatinum Pt(NH₃)₄Cl₂ is impregnated into obtained Ta₃N₅ material on a water bath and water is evaporated, then reduced by hydrogen gas at 300°C (573K) for 2 hours. The impregnating amount of the promoter can be altered within the limit of 0.1-10 wt.%.

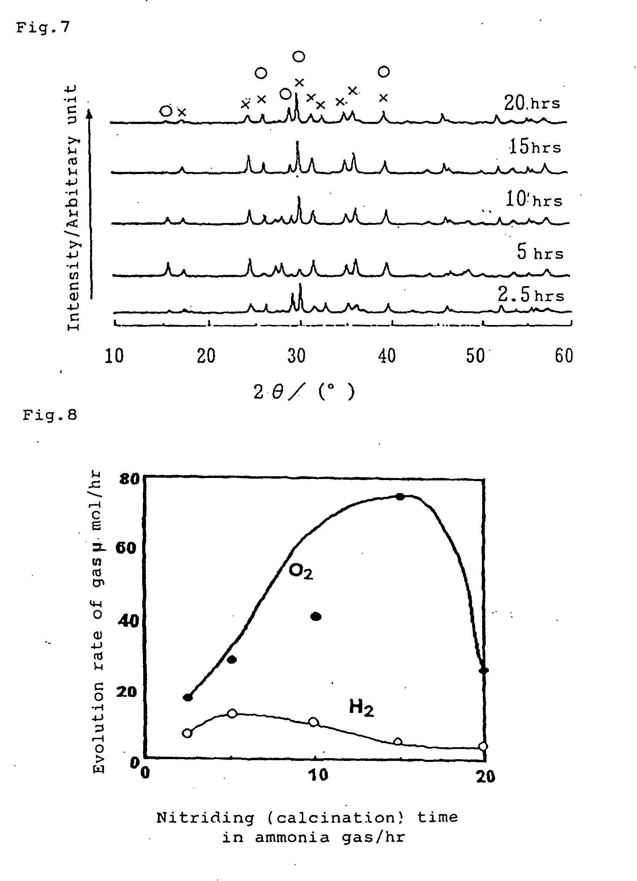

X-ray diffraction patterns of the oxide powder mixture after being calcined in ammonia for 2.5, 5, 10, 15 and 20 hours are shown in Fig.7. The diffraction peaks in Fig.7 are assigned to those of Ta₃N₅ (×), La₂O₃ (O) and La(OH)₃, and the generation of rhombic Ta₃N₅ is recognized. That is, it is recognized that the obtained product is a product containing at least rhombic Ta₃N₅. The U.V.•visible light diffuse reflectance spectrum of said material is measured, and the results indicate that said material absorbs the visible light of shorter wavelength light than 620nm likely to Example 1. In Fig.8, hydrogen and oxygen evolution rate obtained in each nitriding calcinating time of above mentioned material. The generation of hydrogen is carried out by suspending 0.2g of photocatalyst prepared by loading lwt.% of Pt promoter on the material containing Ta₃N₅ obtained by the above mentioned nitriding and calcinating process and by irradiating with visible light. In the meanwhile, the generation of oxygen is carried out by suspending 0.2g of the above mentioned photocatalyst into 0.200dm³ of an aqueous solution of 0.01N AgNO₃, and irradiating with visible light. As the light source, a 500W xenon lamp is used, and the reactor was irradiated with the visible light (wavelength longer than 420nm), using a wavelength cut-off filter. As shown in Fig.8, it is understood that the above catalyst containing Ta₃N₅ can generate hydrogen and oxygen by irradiation of visible light of longer wavelength than 420nm. Further, from Fig.8, it is understood that the above mentioned mixture indicates strong activity to the photo oxidization of water by nitriding calcinating from 5 hours to 20 hours under the ammonia gas flow. As mentioned above, the metal oxide containing Ta₃N₅ is recognized to have an ability to reduce a proton to hydrogen and oxidize water to oxygen by visible light having longer wavelength than 420nm. Still more, by passing through a wavelength filter which cuts off the light of shorter wavelength than 600nm, the same results to the above mentioned case is obtained in the case of irradiation of visible light of longer wave length of longer than 600nm. Furthermore, in the case when visible light of longer wavelength than 700nm is irradiated, even if the light is passed through a wavelength filter which cuts off the visible light of shorter wavelength than 700nm, the generation of hydrogen or oxygen is not observed.

### Control Example 1

In this Control Example, tantalum oxide on the market is used. Platinum, which is the promoter, is added by impregnating tetraaminedichloroplatinum Pt(NH₃)₄Cl₂ on a water bath and by evaporating water. The obtained product is reduced by hydrogen for 2 hours at 300°C (573K). The impregnating amount of the promoter can be altered in the limit of 0.1-5 wt.%.

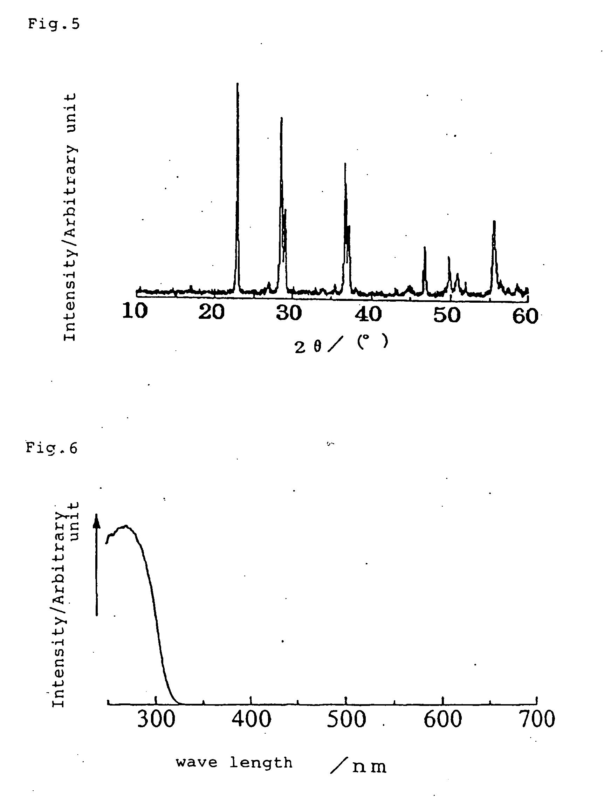

The X-ray diffraction of calcined material is shown in Fig.5. Almost diffraction peaks in Fig.5 belong to Ta₂O₅ and the generation of Ta₂O₅ is recognized. The U.V. visible light diffuse reflectance spectrum of said material is shown in Fig.6. From Fig.6, it is understood that the above material absorbs the U.V light of shorter wavelength than 270nm.When the reaction is carried out by irradiation of visible light in a manner similar to the Examples, the generation of H₂ and O₂ are not observed.

From the above mentioned results, Ta₃N₅ prepared by replacing all oxygen of Ta₂O₅ with nitrogen is recognized to have an ability to reduce a proton to hydrogen and oxidize water to oxygen by visible light having longer wavelength than 420nm.

### INDUSTRIAL APPLICABILITY

As mentioned above, the photocatalyst obtained by the present invention, is a catalyst that acts by visible light, which is the majority in sun light, reaching to the surface of the earth. By carrying out a photocatalyst reaction with sun light, useful-compounds can be produced. Further, as indicated in the Examples, since said photocatalyst has an ability to decompose water to hydrogen and oxygen by visible radiation, it is useful as a photocatalyst converting sun light to hydrogen which is considered to be energy of the next generation. In this connection, the ratio of U.V light to whole sun light is approximately 5%, and it is obvious that the use of visible light is remarkably effective.

## Claims

1. A photocatalyst which consists of rhombic tantalum nitride, Ta₃N₅, having a promoter composed of a transition metal loaded thereon.

2. The photocatalyst according to claim 1, wherein the promoter is platinum.

3. Use of the photocatalyst according to claim 1 or 2, in the decomposition of water.

4. A process for decomposition of water, comprising the use of a photocatalyst according to any of claims 1 or 2.

## Patentansprüche

1. Photokatalysator, bestehend aus rhombischem Tantalnitrid, Ta₃N₅, mit Promotor, gebildet aus einem Übergangsmetall, das darauf aufgebracht ist.

2. Photokatalysator nach Anspruch 1, wobei der Promotor Platin ist.

3. Verwendung des Photokatalysators nach Anspruch 1 oder 2, bei der Spaltung von Wasser.

4. Verfahren zur Spaltung von Wasser, umfassend die Verwendung eines Photokatalysators nach einem der Ansprüche 1 oder 2.

## Revendications

1. Catalyseur qui consiste en un nitrure de tantale rhombique, Ta₃N₅, ayant un promoteur composé d'un métal de transition chargé sur celui-ci.

2. Photocatalyseur selon la revendication 1, dans lequel le promoteur est le platine.

3. Utilisation du photocatalyseur selon la revendication 1 ou 2, dans la décomposition de l'eau.

4. Procédé pour décomposer l'eau, comprenant l'utilisation d'un photocatalyseur selon l'une quelconque des revendications 1 ou 2.
